# EUROPEAN PATENT APPLICATION

(11) **EP 2 899 649 A1**
(43) Date of publication of application: **29.07.2015**
(21) Application number: 13840050.2
(22) Date of filing: 02.05.2013
(51) Int. Cl.: G06F 17/30

(54) **DATA INDEXING METHOD AND DEVICE**

(30) Priority: 24.09.2012 CN 201210356475
(71) Applicant: Huawei Technologies Co., Ltd., Longgang District Shenzhen, Guangdong 518129 (CN)
(72) Inventor: YANG, Jianzhou, Shenzhen Guangdong 518129 (CN); WANG, Xinyu, Shenzhen Guangdong 518129 (CN)
(74) Representative: Pfenning, Meinig & Partner GbR
(86) International application number: PCT/CN2013/075065
(87) International publication number: WO 2014/044053

(57) **Abstract**

Embodiments of the present invention disclose a data indexing method and apparatus. According to the data indexing method and apparatus provided by the embodiments of the present invention, N one-dimensional indexes that correspond to N dimensions and are independent of each other are obtained according to the N dimensions, and it is determined whether address records included in the N one-dimensional indexes that correspond to the dimensions and are independent of each other have an intersection set, so as to obtain data pointed to by an address record corresponding to the intersection set, where the data is used as target indexing data, thereby solving the problem that a one-dimensional indexing technology cannot meet requirements for multi-dimensional indexing combined query and multi-dimensional analysis; in addition, by determining count value of tag number flag bits corresponding to the address records included in the N one-dimensional indexes, a speed requirement for the multi-dimensional analysis is easily and conveniently met, indexing complexity is reduced, and performance of data accurate data indexing is improved.

## Description

This application claims priority to Chinese Patent Application No. 201210356475.5, filed with the Chinese Patent Office on September 24, 2012 and entitled "DATA INDEXING METHOD AND APPARATUS", which is incorporated herein by reference in its entirety.

### TECHNICAL FIELD

The present invention relates to the field of data indexing technologies, and in particular, to a data indexing method and apparatus.

### BACKGROUND

With the development of business intelligence (Business Intelligent), fast statistics and indexing of mass data are required in various fields such as telecommunications service quality management, network performance management, and Internet application analysis. A common one-dimensional indexing technology already cannot meet high requirements for fast storage, statistics, and indexing of mass data.

Currently, a data indexing technology that uses a distributed storage system (Hadoop Database) solves the indexing problem of mass data, in which indexing data is created mainly by partitioning mass data, the data is stored into different partition memories in a column-store manner, and the data is indexed by using the one-dimensional indexing technology. In the one-dimensional indexing technology created based on data in the distributed storage system (Hadoop Database), only limited indexing data can be created, and a large amount of indexing data must be stored into an external storage medium. In addition, the one-dimensional indexing technology cannot meet requirements for multi-dimensional analysis and multi-dimensional indexing combined query, and a speed of one-dimensional indexing decreases after a large amount of data is added. As a result, target data cannot be quickly and conveniently queried, thereby limiting application versatility. Therefore, to meet fast statistics and indexing of mass data, a multi-dimensional indexing technology becomes a new research direction.

### SUMMARY

In view of this, embodiments of the present invention provide a data indexing method and apparatus, which solve the problems of limited application versatility and low indexing efficiency of one-dimensional indexing.

An aspect of the embodiments of the present invention provides a data indexing method, including:
obtaining N one-dimensional indexes that correspond to N dimensions and are independent of each other, where the N is greater than or equal to 2;
determining whether address records included in the N one-dimensional indexes have an intersection set; and
if there is an intersection set, obtaining data pointed to by an address record corresponding to the intersection set, where the data is used as target indexing data.

As an optional implementation manner, the determining whether address records included in the N one-dimensional indexes have an intersection set includes the following steps:
determining whether there is a same address record in the address records included in the N one-dimensional indexes; and
if there is a same address record in the address records comprised in the N one-dimensional indexes, determining that the address records included in the N one-dimensional indexes have an intersection set.

As an optional implementation manner, the determining whether there is a same address record in the address records included in the N one-dimensional indexes includes the following steps:
obtaining, according to the N dimensions, address records of the one-dimensional indexes corresponding to the N dimensions;
adding 1 to a count value of a tag number flag bit corresponding to each address record;
determining whether the count value of the tag number flag bit corresponding to each address record is equal to the N; and
if yes, selecting an address record, whose count value of the tag number flag bit corresponding to the address record is equal to the N, as a same address record.

As an optional implementation manner, the determining whether there is a same address record in the address records included in the N one-dimensional indexes includes the following steps:
A: obtaining a K^{th} one-dimensional index from the N one-dimensional indexes, where the K^{th} one-dimensional index is used as a current one-dimensional index, K is less than the N and K is greater than zero;
B: obtaining an address record of the current one-dimensional index;
C: adding 1 to a count value of a tag number flag bit corresponding to the address record;
D: obtaining a (K+ 1)^{th} one-dimensional index from the N one-dimensional indexes, where the (K+1)^{th} one-dimensional index is used as a current one-dimensional index;
E: determining whether K+1 is equal to N, and if K+1 is not equal to N, performing step B;
F: obtaining an address record of an N^{th} one-dimensional index according to a result that K+1 is equal to N;
G: determining whether a count value of a tag number flag bit corresponding to the address record of the N^{th} one-dimensional index is equal to N-1; and
H: if the count value of a tag number flag bit corresponding to the address record of the N^{th} one-dimensional index is equal to N-1, selecting the address record, whose count value of the tag number flag bit corresponding to the address record of the N^{th} one-dimensional index is equal to N-1, as a same address record.

As an optional implementation manner, before counting the tag number flag bits corresponding to the address records, the method further includes:
initializing count values of the tag number flag bits corresponding to the address records to zero.

As an optional implementation manner, before the obtaining N one-dimensional indexes that correspond to N dimensions and are independent of each other, the method further includes:
partitioning several pieces of data according to metadata into i container data files;
creating, according to a classification criteria, an independent one-dimensional index for data in each container data file; and
storing each container data file and the one-dimensional index correspondingly included in each container data file into a same storage processing node, so as to generate an index table including information about i different storage processing nodes.

As an optional implementation manner, the index table includes a key value table and an address allocation table, where the address allocation table records an address record corresponding to a key value of each one-dimensional index, the key value table includes the key value of each one-dimensional index and a storage address corresponding to the key value, and the storage address corresponding to the key value is used for pointing to an address record corresponding to the key value; and
the address record indicates an offset position at which data is recorded in a container data file, and includes a record number and a record length.

As an optional implementation manner, a storage manner of the key value table includes an ordered linear storage manner or a binary-tree storage manner.

As an optional implementation manner, a block storage manner is used as a storage manner of the address allocation table.

Another aspect of the embodiments of the present invention provides a data indexing apparatus, including:
a first unit, configured to obtain N one-dimensional indexes that correspond to N dimensions and are independent of each other, where the N is greater than or equal to 2;
a second unit, configured to determine whether address records included in the N one-dimensional indexes have an an intersection set; and
a third unit, configured to obtain data pointed to by an address record corresponding to the intersection set, where the data is used as target indexing data.

As an optional implementation manner, the second unit is specifically configured to determine whether there is a same address record in the address records included in the N one-dimensional indexes; and if there is a same address record in the address records comprised in the N one-dimensional indexes, determine that the address records included in the N one-dimensional indexes have an an intersection set.

As an optional implementation manner, the second unit includes:
a first subunit, configured to obtain address records of the N one-dimensional indexes;
a second subunit, configured to add 1 to a count value of a tag number flag bit corresponding to each address record;
a third subunit, configured to determine whether a count value of a tag number flag bit corresponding to each address record is equal to the N; and
a fourth subunit, configured to select, according to a notification that the third subunit determines that the count value of the tag number flag bit corresponding to the address record is equal to the N, an address record, whose count value of the tag number flag bit corresponding to the address record is equal to the N, as a same address record.

As an optional implementation manner, the second unit includes:
a first obtaining unit, configured to obtain a K^{th} one-dimensional index from the N one-dimensional indexes, where the K^{th} one-dimensional index is used as a current one-dimensional index, K is less than the N and K is greater than zero;
a second obtaining unit, configured to obtain an address record of the current one-dimensional index;
a counting unit, configured to add 1 to a count value of a tag number flag bit corresponding to the address record of the current one-dimensional index, where
the first obtaining unit is further configured to obtain a (K+ 1)^{th} one-dimensional index from the N one-dimensional indexes, where the (K+1)^{th} one-dimensional index is used as a current one-dimensional index; and
a control unit, configured to determine whether K+1 is equal to N, and if K+1 is not equal to N, control the second obtaining unit to obtain the address record of the current one-dimensional index, where
the first obtaining unit is further configured to obtain an address record of an N^{th} one-dimensional index according to a result that the control unit determines that K+1 is equal to N;
the control unit is further configured to determine whether a count value of a tag number flag bit corresponding to the address record of the N^{th} one-dimensional index is equal to N-1; and
the first obtaining unit is further configured to select, according to a notification that the control unit determines that the count value of the tag number flag bit corresponding to the address record of the N^{th} one-dimensional index is equal to N-1, the address record, whose count value of the tag number flag bit corresponding to the address record of the N^{th} one-dimensional index is equal to N-1, as a same address record.

As an optional implementation manner, the second unit further includes:
an initializing unit, configured to initialize count values of the tag number flag bits corresponding to the address records to zero.

As an optional implementation manner, the data indexing apparatus further includes:
a partition storage unit, configured to partition several pieces of data according to metadata into i container data files; and
a processing unit, configured to create, according to a classification criteria, an independent one-dimensional indexes for data in each container data file, where
the processing unit is further configured to store each container data file and the one-dimensional index correspondingly included in each container data file into a same storage processing node, so as to generate an index table including information about i different storage processing nodes.

As an optional implementation manner, the index table includes a key value table and an address allocation table, where the address allocation table records an address record corresponding to a key value of each one-dimensional index, the key value table includes the key value of each one-dimensional index and a storage address corresponding to the key value, and the storage address corresponding to the key value is used for pointing to an address record corresponding to the key value; and
the address record indicates an offset position at which data is recorded in a container data file, and includes a record number and a record length.

As an optional implementation manner, a storage manner of the key value table includes an ordered linear storage manner or a binary-tree storage manner.

As an optional implementation manner, a block storage manner is used as a storage manner of the address allocation table.

According to the data indexing method provided by the embodiments of the present invention, N one-dimensional indexes that correspond to N dimensions and are independent of each other are obtained according to the N dimensions, and it is determined whether address records included in the N one-dimensional indexes that correspond to the dimensions and are independent of each other have an intersection set, so as to obtain data pointed to by an address record corresponding to the intersection set, where the data is used as target indexing data, thereby solving the requirement that a one-dimensional indexing technology cannot meet requirements for multi-dimensional indexing combined query and multi-dimensional analysis; in addition, by determining count values of tag number flag bits corresponding to the address records included in the N one-dimensional indexes, a speed requirement of the multi-dimensional analysis is easily and conveniently implemented, indexing complexity is reduced, and performance of accurate data indexing is improved.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a data indexing method according to Embodiment 1 of the present invention;
FIG. 2 is a schematic diagram of another data indexing method according to Embodiment 1 of the present invention;
FIG. 3 is a schematic diagram of still another data indexing method according to Embodiment 1 of the present invention;
FIG. 4 is a schematic diagram of partitioning data and creating one-dimensional indexes according to Embodiment 1 of the present invention;
FIG. 5 is a schematic diagram of an allocation relationship between key values of one-dimensional indexes included in a container data file CDF1 in an index table, and addresses according to Embodiment 1 of the present invention;
FIG. 6a is a schematic application diagram of distributed storage of multi-dimensional key indicators according to an embodiment of the present invention;
FIG. 6b is a schematic application diagram of applying a data indexing method in detail record storage query according to an embodiment of the present invention;
FIG. 7 is a structural diagram of a data indexing apparatus according to Embodiment 2 of the present invention;
FIG. 8 is a structural diagram of a second unit according to Embodiment 2 of the present invention;
FIG. 9 is another structural diagram of a second unit according to Embodiment 2 of the present invention; and
FIG. 10 is a structural diagram of another data indexing apparatus according to Embodiment 2 of the present invention.

### DESCRIPTION OF EMBODIMENTS

To make the technical problems to be solved by the present invention, technical solutions, and beneficial effects more comprehensible, the following further describes the present invention in detail with reference to the accompanying drawings and embodiments.

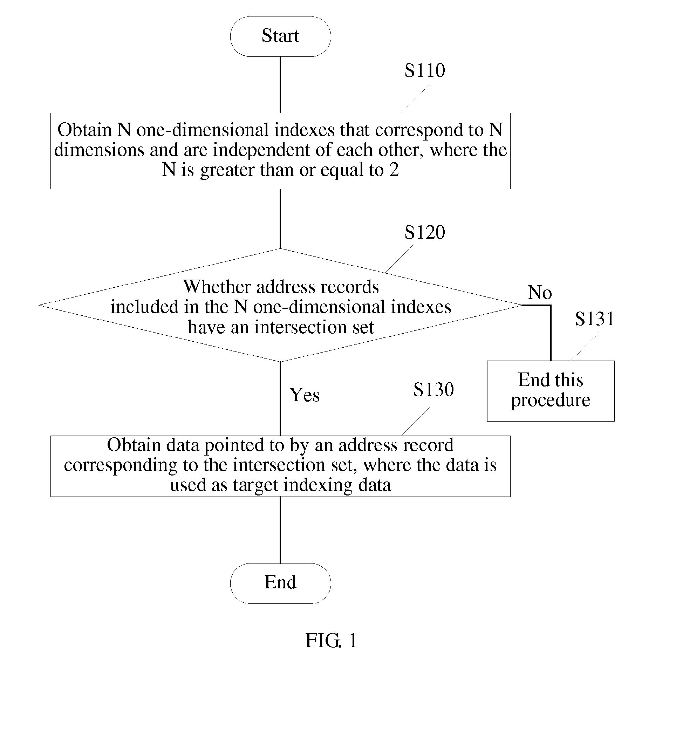

FIG. 1 is a schematic diagram of a data indexing method according to Embodiment 1 of the present invention. As shown in FIG. 1, the data indexing method provided by this embodiment includes the following steps:
S110: Obtain N one-dimensional indexes that correspond to N dimensions and are independent of each other, where the N is greater than or equal to 2.
S120: Determine whether address records included in the N one-dimensional indexes have an intersection set.

If there is an intersection set, perform step S130. If there is no intersection set, perform step S131, that is, end this procedure.

S130: Obtain data pointed to by an address record corresponding to the intersection set, where the data is used as target indexing data.

In this embodiment, N one-dimensional indexes that correspond to N dimensions and are independent of each other are obtained according to the N dimensions, and it is determined whether address records included in the N one-dimensional indexes that correspond to the dimensions and are independent of each other have an intersection set, so as to obtain data pointed to by an address record corresponding to the intersection set, where the data is used as target indexing data, thereby solving the problem that a one-dimensional indexing technology cannot meet requirements for multi-dimensional index combined query and multi-dimensional analysis.

As an optional implementation manner, based on step S120 shown in FIG. 1, the determining whether address records included in the N one-dimensional indexes have an intersection set may further include the following steps:
determining whether there is a same address record in the address records included in the N one-dimensional indexes; and
if there is a same address record, determining that the address records included in the N one-dimensional indexes have an intersection set.

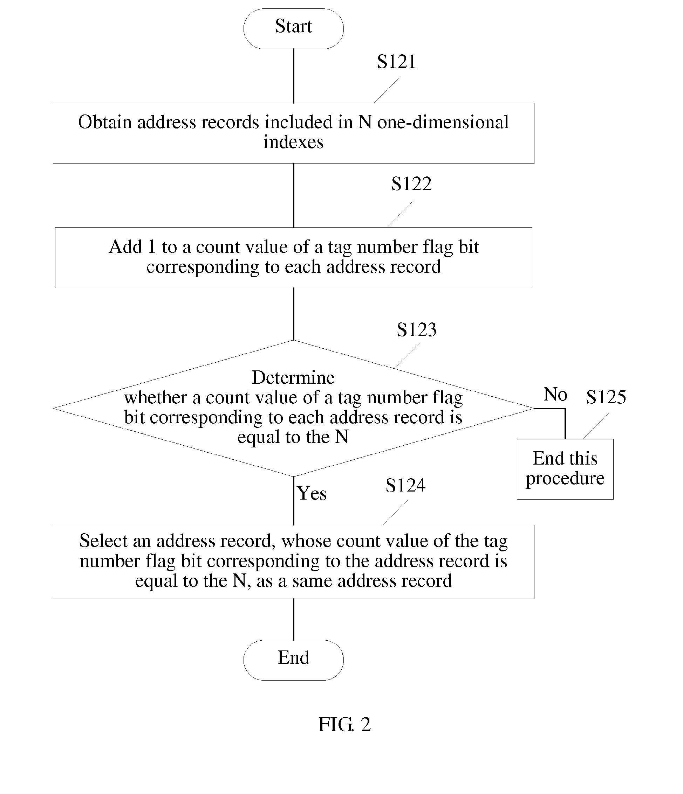

As an optional implementation manner, referring to FIG. 2, FIG. 2 is a schematic diagram of another data indexing method according to Embodiment 1 of the present invention. As shown in FIG. 2, the determining whether there is a same address record in the address records included in the N one-dimensional indexes includes the following steps:
S121: Obtain the address records included in the N one-dimensional indexes.
S122: Add 1 to a count value of a tag number flag bit corresponding to each address record.
S123: Determine whether a count value of a tag number flag bit corresponding to each address record is equal to the N; if yes, perform step S124; and if not, perform step S125, that is, end this procedure.
S124: Select an address record, whose count value of the tag number flag bit corresponding to the address record is equal to the N, as a same address record.

In this implementation manner, a function of selecting a same address record is implemented by means of tag counting, and technical implementation is easy, reliable, and error free. By determining count values of tag number flag bits corresponding to address records included in N one-dimensional indexes, a speed requirement for multi-dimensional analysis is easily and conveniently implemented, indexing complexity is reduced, and performance of data accurate data indexing is improved.

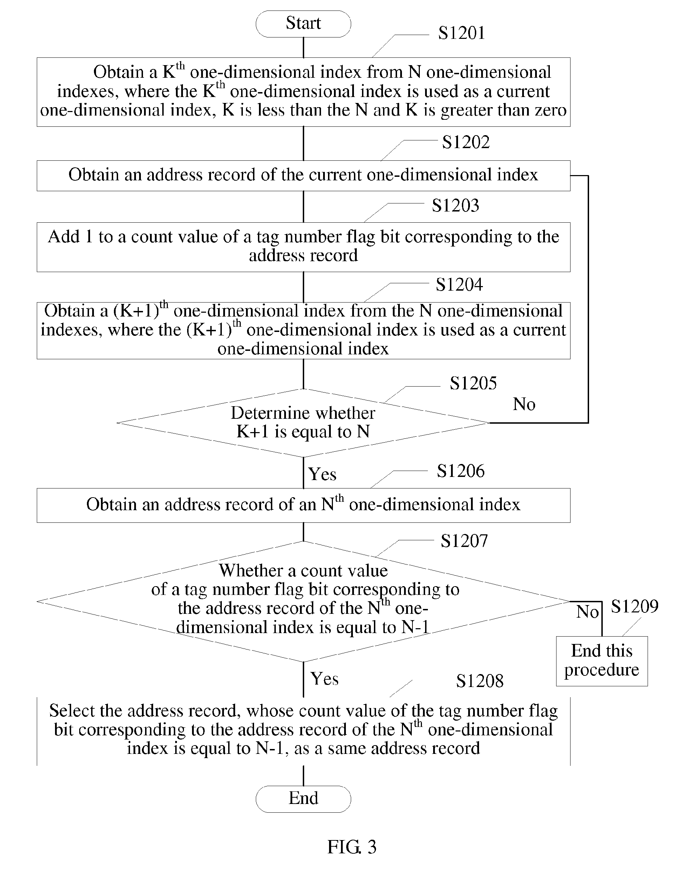

As an optional implementation manner, referring to FIG. 3, FIG. 3 is a schematic diagram of still another data indexing method according to Embodiment 1 of the present invention. As shown in FIG. 3, the determining whether there is a same address record in the address records included in the N one-dimensional indexes includes the following steps:
S1201: Obtain a K^{th} one-dimensional index from the N one-dimensional indexes, where the K^{th} one-dimensional index is used as a current one-dimensional index, K is less than the N and K is greater than zero.
S1202: Obtain an address record of the current one-dimensional index.
S1203: Add 1 to a count value of a tag number flag bit corresponding to the address record.
S1204: Obtain a (K+1)^{th} one-dimensional index from the N one-dimensional indexes, where the (K+1)^{th} one-dimensional index is used as a current one-dimensional index.
S1205: Determine whether K+1 is equal to N.

If K+1 is not equal to N, perform step S1202.

If K+1 is equal to N, perform step S1206.

S1206: Obtain an address record of an N^{th} one-dimensional index.

S1207: Determine whether a count value of a tag number flag bit corresponding to the address record of the N^{th} one-dimensional index is equal to N-1.

If yes, perform step S1208; and if not, perform step S1209, that is, end this procedure.

S1208: Select the address record, whose count value of the tag number flag bit corresponding to the address record of the N^{th} one-dimensional index is equal to N-1, as a same address record.

In this implementation manner, a function of selecting a same address record is also implemented by means of tag counting, and technical implementation is easy, reliable, and error free. Before counting a corresponding tag number flag bit for an address record of the last one-dimensional index, it is already determined that 1 needs to be added to a count value of a number flag bit corresponding to a current address record. Therefore, it only needs to be determined whether the count value of the tag number flag bit corresponding to the current address record is equal to N-1, and if yes, it can be indirectly determined that the count value of the tag number flag bit corresponding to the current address record is N, that is, the current address record is used as a same address record.

As an optional implementation manner, before counting the tag number flag bits corresponding to the address records, the method further includes:
initializing count values of the tag number flag bits corresponding to the address records to zero.

As an optional implementation manner, before the obtaining N one-dimensional indexes that correspond to N dimensions and are independent of each other, the method may further include:
partitioning several pieces of data according to metadata into i container data files;
creating, according to a classification criteria, an independent one-dimensional index for data in each container data file; and
storing each container data file and the one-dimensional index correspondingly included in each container data file into a same storage processing node, so as to generate an index table including information about i different storage processing nodes.

The metadata includes record information, which may be time information, and may also be classification criteria information. A container data file may be stored into a memory or an external storage medium.

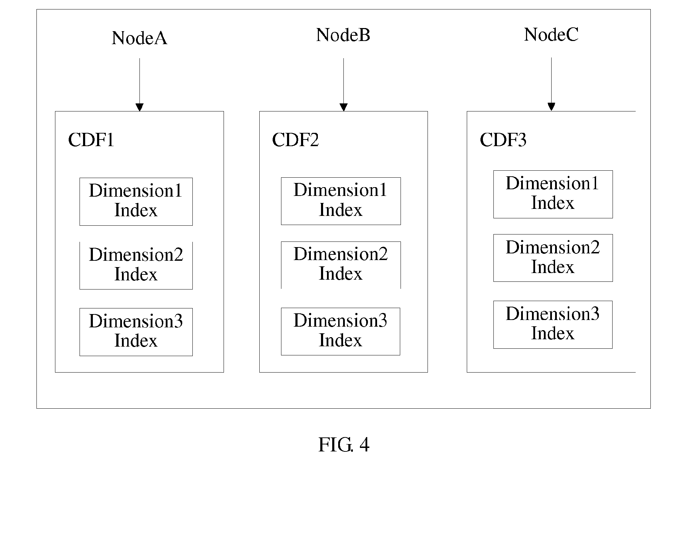

Referring to FIG. 4, FIG. 4 is a schematic diagram of partitioning data and creating one-dimensional indexes according to Embodiment 1 of the present invention. Mass data is partitioned by using metadata and according to time record information or other classification standard information, where there may be several container data files. Three container data files are obtained by partitioning in this embodiment. As shown in FIG. 4, three container data files (Container Data File, CDF) are obtained by partitioning, which are a container data file CDF1, a container data file CDF2, and a container data file CDF3. One-dimensional indexes are created for data in each container data file according to a classification criteria, and a limited number of one-dimensional indexes in each container data file are independent of each other, that is, three one-dimensional indexes Dimension1 Index, Dimension2 Index, and Dimension3 Index that are included in the container data file CDF1 are independent of each other; similarly, three one-dimensional indexes Dimension1 Index, Dimension2 Index, and Dimension3 Index that are included in the container data file CDF2 are also independent of each other; and three one-dimensional indexes Dimension1 Index, Dimension2 Index, and Dimension3 Index that are included in the container data file CDF3 are also independent of each other. The container data file CDF1, and the one-dimensional indexes Dimension1 Index, Dimension2 Index, and Dimension3 Index that are included in the container data file CDF1 are stored into a same node NodeA. The container data file CDF2, and the one-dimensional indexes Dimension1 Index, Dimension2 Index, and Dimension3 Index that are included in the container data file CDF2 are stored into a same node NodeB. The container data file CDF3, and the one-dimensional indexes Dimension1 Index, Dimension2 Index, and Dimension3 Index that are included in the container data file CDF3 are stored into a same node NodeC.

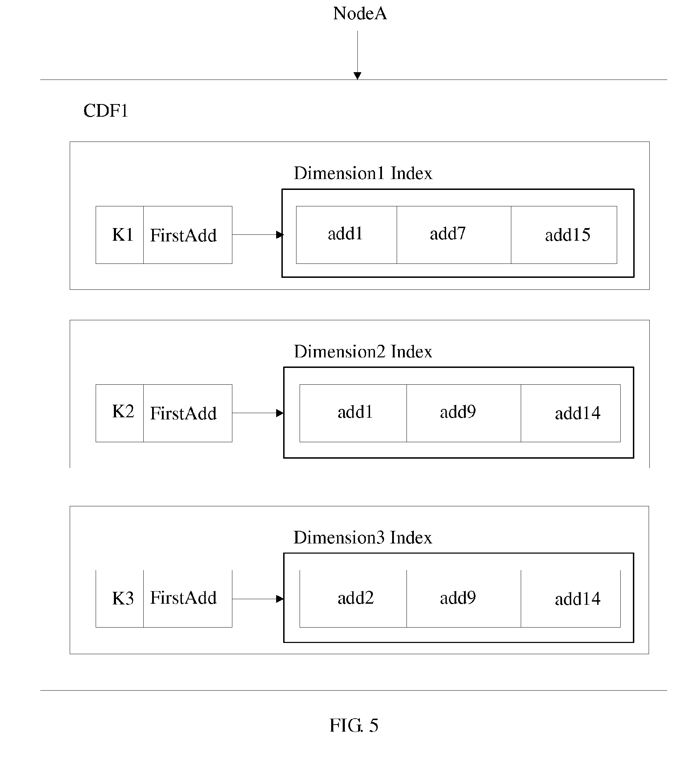

Referring to FIG. 5, FIG. 5 is a schematic diagram of an allocation relationship between key values of the one-dimensional indexes included in the container data file CDF1 in an index table, and addresses according to Embodiment 1 of the present invention. As shown in FIG. 5, the index table includes a key value table and an address allocation table, where the address allocation table records an address record corresponding to a key value of each one-dimensional index; the key value table includes the key value of each one-dimensional index and a storage address of the first address record, corresponding to the key value, of the address allocation table, where the address record may be indicated by using a record number and a record length; and the address record may locate an address offset of the record, so as to obtain data. The address record indicates an offset position at which data is recorded in a container data file. For data with an equal length, the address record may be indicated by using a record number for simplification. In this embodiment, a type of several pieces of data is set to be a type of data with an equal length, so that the address record is indicated by using a record number for simplification. For example, a key value table corresponding to the one-dimensional index Dimension1 Index includes a key value K1 and a storage address First Add corresponding to the key value K1, where the storage address First Add corresponding to the key value K1 is used for pointing to an address record add1 an address record add7, and an address record add15 that correspond to the key value K1, and add1 add7, and add15 are record numbers of the address records. A key value table corresponding to the one-dimensional index Dimension2 Index includes a key value K2 and a storage address FirstAdd corresponding to the key value K2, where the storage address FirstAdd corresponding to the key value K2 is used for pointing to an address record add1 an address record add9, and an address record add14 that correspond to the key value K2, and add1 add9, and add14 are record numbers of the address records. A key value table corresponding to the one-dimensional index Dimension3 Index includes a key value K3 and a storage address FirstAdd corresponding to the key value K3, where the storage address FirstAdd corresponding to the key value K3 is used for pointing to an address record add2, an address record add9, and an address record add14 that correspond to the key value K3, and add2, add9, and add14 are record numbers. When applied to a specific searching scenario, it may be call detail record query. Information stored in the CDF1 container data file is call detail record information on September 1, where the call detail record at least includes two parts of information, which are an area code and a charging identifier, and then a searching condition corresponds to the area code and the charging identifier. If the key value K1 corresponds to an area code "Wuhan" city, and the key value K2 corresponds to a charging identifier "free call", a one-dimensional index whose dimension corresponds to indexing information "Wuhan" is obtained by indexing, so as to index into the address record add1 the address record add7, and the address record add15 that correspond to the key value K1; and a one-dimensional index whose dimension corresponds to indexing information "free call" is obtained by indexing, so as to index into the address record add1 the address record add9, and the address record add14 that correspond to the key value K2. All call detail record information pointed to by the address records add1 add9, and add14 is call detail record data about free call. All call detail record information pointed to by the address record add1 the address record add7, and the address record add15 is call detail record data about a call to Wuhan, so that it is indexed that the address record addl is a same address record, and it is determined that the call detail record information pointed to by the address record add1 is target indexing data.

As an optional implementation manner, a storage manner of the key value table includes an ordered linear storage manner or a binary-tree storage manner.

As an optional implementation manner, a block storage manner is used as a storage manner of the address allocation table.

In addition, it should be noted that the data indexing method provided by this embodiment can effectively improve data loading performance. 1 million 512-byte call detail records are used as an example, in which12 dimensions are included. A loading performance test result of using orthogonal multi-dimensional indexing to organize data and using a SybaseIQ database is recorded in Table (1). It can be seen that data inserting performance of the orthogonal multi-dimensional indexing is 9.84 times of that of the SybaseIQ.

**Table (1)**

| Number of records | Orthogonal multi-dimensional indexing (single RH2285) | SybaseIQ (four-node cluster) | Performance improvement multiple |
|---|---|---|---|
| 1 million | 36.9 MB/S | 15 MB/S | 9.84 times |

According to the data indexing method provided by this embodiment, an orthogonal operation is performed for address records in a manner of accumulating count values of tag number flag bits, so as to obtain a same address record, thereby reducing the algorithm complexity for comparison times. It can be seen from Table (2) that performing a vector intersection set operation in the tag accumulation manner greatly reduces the algorithm complexity, and improves the performance.

**Table (2)**

| Dimension combination | Address block size | Whether to optimize | Time consumed for performing vector intersection set operation for one hundred thousand times (second) | Optimization efficiency (multiple) |
|---|---|---|---|---|
| 10*10000 | 8 | Ordinary vector intersection set operation | 450 | 1 |
| 10*10000 | 8 | Tag accumulation | 30 | 15 |
| 10*10000 | 32 | Tag accumulation | 32 | 14 |
| 10*10000 | 64 | Tag accumulation | 2.8 | 161 |
| 10*10000 | 96 | Tag accumulation | 1.67 | 269 |

In telecommunications signaling monitoring, network performance management (Service Quality Management, SQM), customer experience management (Customer Experience Management, CEM), and Internet data analysis, a multi-dimensional key indicator (Key Performance Indicator, KPI) is calculated according to an input call detail record receipt (Call Detail Record, CDR), so as to mine information included in data. For example, a CDR generated when a mobile user accesses the Internet includes dimensions such as a terminal type, an operating system type, a device type, a cell, a gateway GPRS support node (Gateway GPRS Support Node), a serving GPRS support node (Serving GPRS SUPPORT NODE), and a browsed or an accessed website, and multi-dimensional KPI analysis needs to be performed.

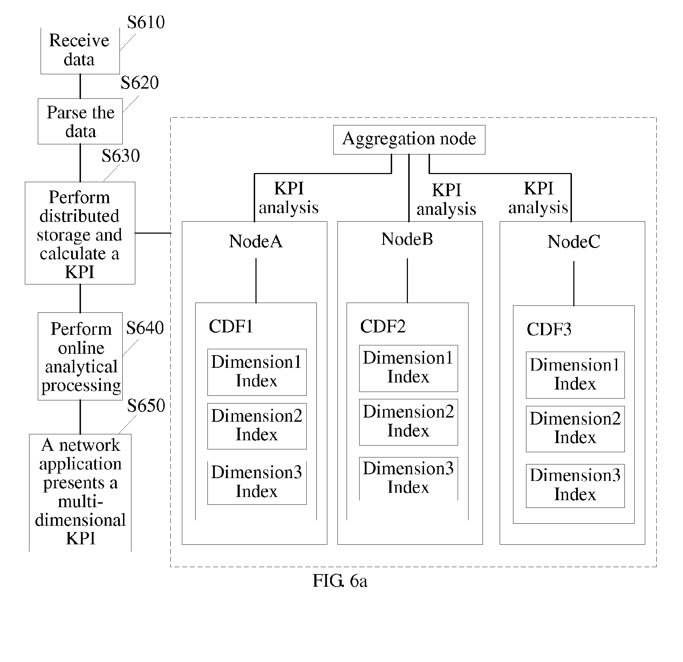

Referring to FIG. 6a, FIG. 6a is a schematic application diagram of distributed storage of a multi-dimensional KPI according to an embodiment of the present invention. As shown in FIG. 6a, the distributed storage of a multi-dimensional KPI according to this embodiment may be implemented based on a data indexing method, that is, based on implementation of a multi-dimensional indexing method provided by this embodiment, call detail records including target data are obtained, and a KPI are is calculated for the call detail records. The multi-dimensional KPI may be obtained through calculation based on a manner of obtaining an index table provided by this embodiment. That is, the call detail records are partitioned, then, several one-dimensional indexes are created for each container data file, key indicator metadata corresponding to the several one-dimensional indexes of each container data file is aggregated to obtain the a KPI of each container data file, and then the KPI of each container data file is aggregated to obtain a multi-dimensional KPI. As shown in FIG. 6a, a method for obtaining a multi-dimensional KPI includes the following steps:
S610: Receive data.
S620: Parse the data.
S630: Perform distributed storage and calculate a KPI.
S640: Perform online analytical processing.
S650: A network application presents a multi-dimensional KPI.

When step S630 is performed, reference may be made to a dashed line block shown in FIG. 6a, which shows a simple process of calculating the multi-dimensional KPI by means of partitioning, which mainly partioning call detail records CDRs in the data in a memory or an external storage medium. The figure shows three container data files, which are CDF1, CDF2, and CDF3. Multiple one-dimensional indexes are independently created for each container data file, and three one-dimensional indexes, that is, Dimension1 Index, Dimension2 Index, and Dimension3 Index, are created for each container data file, as shown in the figure. Then, a calculation task is performed for each distributed node: a one-dimension is used to obtain a CDR, and a KPI of each distributed node is calculated, that is, KPI analysis is performed. After calculation for the distributed node is completed, the key indicator KPI of each distributed node is sent to an aggregation node for aggregation, and a multi-dimensional key indicator KPI after the aggregation is stored into a data warehouse for online analytical processing, so that the network application presents the multi-dimensional key indicator KPI.

In telecommunications signaling monitoring, network performance management (Service Quanlity Management, SQM for short), customer experience management (Customer Experience Management, CEM for short), and Internet data analysis, a multi-dimensional key indicator (Key Performance Indicator, KPI for short) is calculated according to an input call detail record receipt (Call Detail Record, CDR for short), so as to mine information included in data. For example, a CDR generated when a mobile user accesses the Internet includes dimensions such as a terminal type, an operating system type, a device type, a cell, a gateway (Gateway GPRS Support Node), a serving GPRS support node (Serving GPRS SUPPORT NODE), and a browsed or an accessed website, and multi-dimensional detail record query needs to be performed.

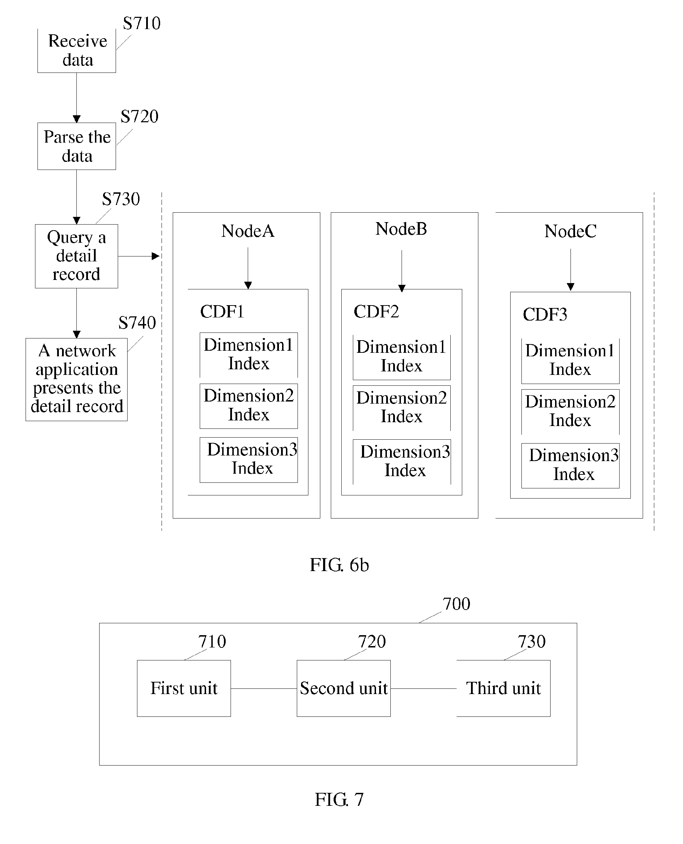

Referring to FIG. 6b, FIG. 6b is a schematic application diagram of applying a data indexing method in detail record storage query according to an embodiment of the present invention. As shown in FIG. 6b, a method for applying the data indexing method provided by this embodiment in the detail record storage query is as follows:
S710: Receive data.
S720: Parse the data.
S730: Query a detail record.
S740. A network application presents the detail record.

Execution of step S730 should be implemented based on the data indexing method provided by this embodiment. As shown in a dashed line block pointed to by step S730, after a call detail record including target data is obtained in the data indexing method provided by this embodiment, the network application presents the call detail record.

Referring to FIG. 7, FIG. 7 is a structural diagram of a data indexing apparatus according to Embodiment 2 of the present invention. As shown in FIG. 7, the data indexing apparatus provided by this embodiment includes: a first unit 710, a second unit 720, and a third unit 730.

The first unit 710 is configured to obtain N one-dimensional indexes that correspond to N dimensions and are independent of each other, where the N is greater than or equal to 2.

The second unit 720 is configured to determine whether address records included in the N one-dimensional indexes have an intersection set.

The third unit 730 is configured to obtain, according to a notification that a determining result of the second unit is yes, data pointed to by an address record corresponding to the intersection set, where the data is used as target indexing data.

In this embodiment, the first unit 710 obtains, according to N dimensions, N one-dimensional indexes that correspond to the N dimensions and are independent of each other, and the second unit 720 determines whether address records included in the N one-dimensional indexes that correspond to the dimensions and are independent of each other have an intersection set, so that the third unit 730 obtains data pointed to by an address record corresponding to the intersection set, where the data is used as target indexing data, thereby solving the problem that a one-dimensional indexing technology cannot meet requirements for multi-dimensional index combined query and multi-dimensional analysis.

As an optional implementation manner, the second unit is specifically configured to determine whether there is a same address record in the address records included in the N one-dimensional indexes; and if yes, determine that the address records included in the N one-dimensional indexes have an intersection set.

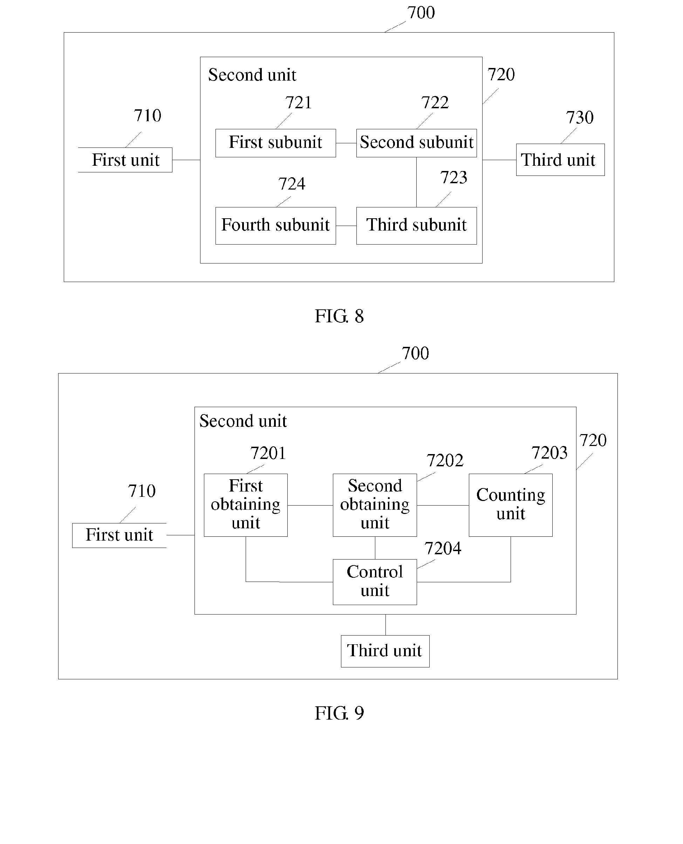

As an optional implementation manner, referring to FIG. 8, FIG. 8 is a structural diagram of the second unit according to Embodiment 2 of the present invention. As shown in FIG. 8, the second unit 720 specifically includes:
a first subunit 721, configured to obtain address records of the N one-dimensional indexes;
a second subunit 722, configured to add 1 to a count value of a tag number flag bit corresponding to each address record;
a third subunit 723, configured to determine whether the count value of the tag number flag bit corresponding to each address record is equal to the N; and
a fourth subunit 724, configured to select, according to a notification that the third subunit 723 determines that the count value of the tag number flag bit corresponding to the address record is equal to the N, the address record, whose count value of the tag number flag bit corresponding to the address record is equal to the N, as a same address record.

Referring to FIG. 9, FIG. 9 is another structural diagram of the second unit according to Embodiment 2 of the present invention. As shown in FIG. 9, the second unit 720 based on FIG. 7 specifically includes:
a first obtaining unit 7201, configured to obtain a K^{th} one-dimensional index from the N one-dimensional indexes, where the K^{th} one-dimensional index is used as a current one-dimensional index, K is less than the N and K is greater than zero;
a second obtaining unit 7202, configured to obtain an address record of the current one-dimensional index;
a counting unit 7203, configured to add 1 to a count value of a tag number flag bit corresponding to the address record of the current one-dimensional index, where
the first obtaining unit 7201 is further configured to obtain a (K+ 1)^{th} one-dimensional index from the N one-dimensional indexes, where the (K+ 1)^{th} one-dimensional index is used as a current one-dimensional index; and
a control unit 7204, configured to determine whether K+1 is equal to N, and if K+1 is not equal to N, control the second obtaining unit 7202 to obtain the address record of the current one-dimensional index, where
the first obtaining unit 7201 is further configured to obtain an address record of an N^{th} one-dimensional index according to a result that the control unit determines that K+1 is equal to N;
the control unit 7204 is further configured to determine whether a count value of a tag number flag bit corresponding to the address record of the N^{th} one-dimensional index is equal to N-1; and
the first obtaining unit 7201 is further configured to select, according to a notification that the control unit 7204 determines that the count value of the tag number flag bit corresponding to the address record of the N^{th} one-dimensional index is equal to N-1, the address record, whose count value of the tag number flag bit corresponding to the address record of the N^{th} one-dimensional index is equal to N-1, as a same address record.

As an optional implementation manner, the second unit further includes an initializing unit, configured to initialize the count values of the tag quantity flags corresponding to the address records to zero.

As an optional implementation manner, the data indexing apparatus further includes:
a partition storage unit, configured to partition several pieces of data according to metadata into i container data files; and
a processing unit, configured to create, according to a classification criteria, an independent one-dimensional index for data in each container data file, where
the processing unit is further configured to store each container data file and the one-dimensional index correspondingly included in each container data file into a same storage processing node, so as to generate an index table including information about i different storage processing nodes.

As an optional implementation manner, the index table includes a key value table and an address allocation table, where the address allocation table records an address record corresponding to a key value of each one-dimensional index, and the key value table includes the key value of each one-dimensional index and a storage address of the first address record, corresponding to the key value, of the address allocation table; and
the address record indicates an offset position at which data is recorded in a container data file, and includes a record number and a record length.

As an optional implementation manner, a storage manner of the key value table includes an ordered linear storage manner or a binary-tree storage manner.

As an optional implementation manner, a block storage manner is used as a storage manner of the address allocation table.

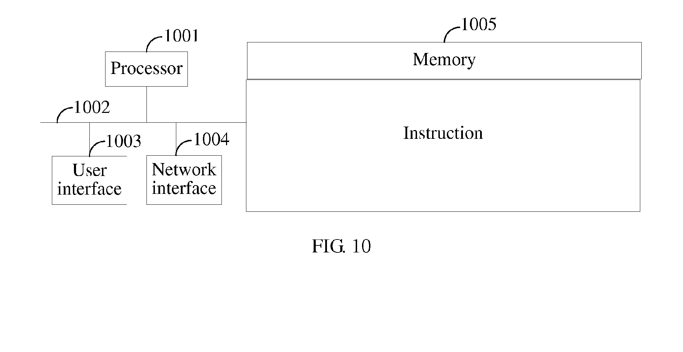

Referring to FIG. 10, FIG. 10 is a structural diagram of another data indexing apparatus according to Embodiment 2 of the present invention. As shown in FIG. 10, the data indexing apparatus includes at least one processor 1001, at least one network interface 1004, a memory 1005, and at least one communications bus 1002 and at least one user interface 1003.

The communications bus 1002 is configured to implement connection and communication between the foregoing components, and the user interface 1003 is configured to implement interaction with a user. The memory 1005 may store an instruction, so that the processor 1001 performs the following procedure:
obtaining N one-dimensional indexes that correspond to N dimensions and are independent of each other, where the N is greater than or equal to 2;
determining whether address records included in the N one-dimensional indexes have an an intersection set; and
if there is an intersection set, obtaining data pointed to by an address record corresponding to the intersection set, where the data is used as target indexing data.

As an optional implementation manner, the processor 1001 may further determine whether there is a same address record in the address records included in the N one-dimensional indexes; and if yes, determine that the address records included in the N one-dimensional indexes have an intersection set.

As an optional implementation manner, the processor 1001 may further specifically perform the following procedure:
obtaining, according to the N dimensions, address records of the one-dimensional indexes corresponding to the N dimensions;
adding 1 to a count value of a tag number flag bit corresponding to each address record;
determining whether the count value of the tag number flag bit corresponding to each address record is equal to the N; and
if yes, selecting the address record, whose count value of the tag number flag bit corresponding to the address record is equal to the N, as a same address record.

As an optional implementation manner, the processor 1001 may further specifically perform the following procedure:
A: obtaining a K^{th} one-dimensional index from the N one-dimensional indexes, where the K^{th} one-dimensional index is used as a current one-dimensional index, K is less than the N and K is greater than zero;
B: obtaining an address record of the current one-dimensional index;
C: adding 1 to a count value of a tag number flag bit corresponding to the address record;
D: obtaining a (K+ 1)^{th} one-dimensional index from the N one-dimensional indexes, where the (K+1)^{th} one-dimensional index is used as a current one-dimensional index;
E: determining whether K+1 is equal to N, and if K+1 is not equal to N, performing step B;
F: obtaining an address record of an N^{th} one-dimensional index according to a result that K+1 is equal to N;
G: determining whether a count value of a tag number flag bit corresponding to the address record of the N^{th} one-dimensional index is equal to N-1; and
H: if yes, selecting the address record, whose count value of the tag number flag bit corresponding to the address record of the N^{th} one-dimensional index is equal to N-1, as a same address record.

As an optional implementation manner, the processor 1001 is further configured to: before counting the tag number flag bits corresponding to the address records, initialize the count values of the tag number flag bits corresponding to the address records to zero.

As an optional implementation manner, before obtaining the N one-dimensional indexes that correspond to the N dimensions and are independent of each other, the processor 1001 further performs the following steps:
partitioning several pieces of data according to metadata into i container data files;
creating, according to a classification criteria, an independent one-dimensional index for data in each container data file; and
storing each container data file and the one-dimensional index correspondingly included in each container data file into a same storage processing node, so as to generate an index table including information about i different storage processing nodes.

As an optional implementation manner, the index table includes a key value table and an address allocation table, where the address allocation table records an address record corresponding to a key value of each one-dimensional index, and the key value table includes the key value of each one-dimensional index and a storage address of the first address record, corresponding to the key value, of the address allocation table; and
the address record indicates an offset position at which data is recorded in a container data file, and includes a record number and a record length.

As an optional implementation manner, a storage manner of the key value table includes an ordered linear storage manner or a binary-tree storage manner.

As an optional implementation manner, a block storage manner is used as a storage manner of the address allocation table.

In the several embodiments provided by the present application, it should be understood that the disclosed apparatus and method may be implemented in other manners. For example, the described apparatus embodiment is merely exemplary. For example, the module or unit division is merely logical function division and may be other division in actual implementation. For example, a plurality of units or modules may be combined or integrated into another system, or some features may be ignored or not performed. In addition, the displayed or discussed mutual couplings or direct couplings or communication connections may be implemented through some interfaces. The indirect couplings or communication connections between the apparatuses, modules, or units may be implemented in electrical, mechanical, or other forms.

The modules or units described as separate parts may or may not be physically separate, and parts displayed as modules or units may or may not be physical modules or units, may be located in one position, or may be distributed on a plurality of network modules or units. A part or all of the modules or units may be selected according to actual needs to achieve the objectives of the solutions of the embodiments of the present invention.

In addition, functional modules or units in the embodiments of the present invention may be integrated into one processing module or unit, or each of the modules or units may exist alone physically, or two or more modules or units may be integrated into one module or unit. The integrated modules or units may be implemented in a form of hardware, or may be implemented in a form of a software functional unit.

When the integrated module or unit is implemented in the form of a software functional module or unit and sold or used as an independent product, the integrated module or unit may be stored in a computer-readable storage medium. Based on such an understanding, the technical solutions of the present invention essentially, or the part contributing to the prior art, or all or a part of the technical solutions may be implemented in the form of a software product. The computer software product is stored in a storage medium and includes several instructions for instructing a computer device (which may be a personal computer, a server, a network device, or the like) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any equivalent modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A data indexing method, comprising:
obtaining N one-dimensional indexes that correspond to N dimensions and are independent of each other, wherein the N is greater than or equal to 2;
determining whether address records comprised in the N one-dimensional indexes have an intersection set; and
if there is an intersection set, obtaining data pointed to by an address record corresponding to the intersection set, wherein the data is used as target indexing data.

2. The data indexing method according to claim 1, wherein the determining whether address records comprised in the N one-dimensional indexes have an intersection set comprises the following steps:
determining whether there is a same address record in the address records comprised in the N one-dimensional indexes; and
if there is a same address record in the address records comprised in the N one-dimensional indexes, determining that the address records comprised in the N one-dimensional indexes have an intersection set.

3. The data indexing method according to claim 2, wherein the determining whether there is a same address record in the address records comprised in the N one-dimensional indexes comprises the following steps:
obtaining, according to the N dimensions, address records of the one-dimensional indexes corresponding to the N dimensions;
adding 1 to a count value of a tag number flag bit corresponding to each address record;
determining whether the count value of the tag number flag bit corresponding to each address record is equal to the N; and
if yes, selecting an address record, whose count value of the tag number flag bit corresponding to the address record is equal to the N, as a same address record.

4. The data indexing method according to claim 2, wherein the determining whether there is a same address record in the address records comprised in the N one-dimensional indexes comprises the following steps:
A: obtaining a K^{th} one-dimensional index from the N one-dimensional indexes, wherein the K^{th} one-dimensional index is used as a current one-dimensional index, K is less than the N and K is greater than zero;
B: obtaining an address record of the current one-dimensional index;
C: adding 1 to a count value of a tag number flag bit corresponding to the address record;
D: obtaining a (K+1)^{th} one-dimensional index from the N one-dimensional indexes, wherein the (K+1)^{th} one-dimensional index is used as a current one-dimensional index;
E: determining whether K+1 is equal to N, and if K+1 is not equal to N, performing step B;
F: obtaining an address record of an N^{th} one-dimensional index according to a result that K+1 is equal to N;
G: determining whether a count value of a tag number flag bit corresponding to the address record of the N^{th} one-dimensional index is equal to N-1; and
H: if the count value of a tag number flag bit corresponding to the address record of the N^{th} one-dimensional index is equal to N-1, selecting the address record, whose count value of the tag number flag bit corresponding to the address record of the N^{th} one-dimensional index is equal to N-1, as a same address record.

5. The data indexing method according to claim 3 or 4, wherein before counting tag number flag bits corresponding to the address records, the method further comprises:
initializing count values of the tag number flag bits corresponding to the address records to zero.

6. The data indexing method according to claim 5, wherein before the obtaining N one-dimensional indexes that correspond to N dimensions and are independent of each other, the method further comprises:
partitioning several pieces of data according to metadata into i container data files;
creating, according to a classification criteria, an independent one-dimensional index for data in each container data file; and
storing each container data file and the one-dimensional index correspondingly comprised in each container data file into a same storage processing node, so as to generate an index table comprising information about i different storage processing nodes.

7. The data indexing method according to claim 6, wherein the index table comprises a key value table and an address allocation table, wherein the address allocation table records an address record corresponding to a key value of each one-dimensional index, the key value table comprises the key value of each one-dimensional index and a storage address corresponding to the key value, and the storage address corresponding to the key value is used for pointing to an address record corresponding to the key value; and
the address record indicates an offset position at which data is recorded in a container data file, and comprises a record number and a record length.

8. The data indexing method according to claim 7, wherein a storage manner of the key value table comprises an ordered linear storage manner or a binary-tree storage manner.

9. The data indexing method according to claim 8, wherein a block storage manner is used as a storage manner of the address allocation table.

10. A data indexing apparatus, comprising:
a first unit, configured to obtain N one-dimensional indexes that correspond to N dimensions and are independent of each other, wherein the N is greater than or equal to 2;
a second unit, configured to determine whether address records comprised in the N one-dimensional indexes have an intersection set; and
a third unit, configured to obtain data pointed to by an address record corresponding to the intersection set, wherein the data is used as target indexing data.

11. The data indexing apparatus according to claim 10, wherein the second unit is specifically configured to determine whether there is a same address record in the address records comprised in the N one-dimensional indexes; and if there is a same address record in the address records comprised in the N one-dimensional indexes, determine that the address records comprised in the N one-dimensional indexes have an intersection set.

12. The data indexing apparatus according to claim 11, wherein the second unit comprises:
a first subunit, configured to obtain address records of the N one-dimensional indexes;
a second subunit, configured to add 1 to a count value of a tag number flag bit corresponding to each address record;
a third subunit, configured to determine whether the count value of the tag number flag bit corresponding to each address record is equal to the N; and
a fourth subunit, configured to select, according to a notification that the third subunit determines that the count value of the tag number flag bit corresponding to the address record is equal to the N, an address record, whose count value of the tag number flag bit corresponding to the address record is equal to the N, as a same address record.

13. The data indexing apparatus according to claim 11, wherein the second unit comprises:
a first obtaining unit, configured to obtain a K^{th} one-dimensional index from the N one-dimensional indexes, wherein the K^{th} one-dimensional index is used as a current one-dimensional index, K is less than the N and K is greater than zero;
a second obtaining unit, configured to obtain an address record of the current one-dimensional index;
a counting unit, configured to add 1 to a count value of a tag number flag bit corresponding to the address record of the current one-dimensional index, wherein
the first obtaining unit is further configured to obtain a (K+ 1)^{th} one-dimensional index from the N one-dimensional indexes, wherein the (K+ 1)^{th} one-dimensional index is used as a current one-dimensional index; and
a control unit, configured to determine whether K+1 is equal to N, and if K+1 is not equal to N, control the second obtaining unit to obtain the address record of the current one-dimensional index, wherein
the first obtaining unit is further configured to obtain an address record of an N^{th} one-dimensional index according to a result that the control unit determines that K+1 is equal to N;
the control unit is further configured to determine whether a count value of a tag number flag bit corresponding to the address record of the N^{th} one-dimensional index is equal to N-1; and
the first obtaining unit is further configured to select, according to a notification that the control unit determines that the count value of the tag number flag bit corresponding to the address record of the N^{th} one-dimensional index is equal to N-1, the address record, whose count value of the tag number flag bit corresponding to the address record of the N^{th} one-dimensional index is equal to N-1, as a same address record.

14. The data indexing apparatus according to claim 12 or 13, wherein the second unit further comprises:
an initializing unit, configured to initialize count values of the tag number flag bits corresponding to the address records to zero.

15. The data indexing apparatus according to claim 14, further comprising:
a partition storage unit, configured to partition several pieces of data according to metadata into i container data files; and
a processing unit, configured to create, according to a classification criteria, an independent one-dimensional index for data in each container data file, wherein
the processing unit is further configured to store each container data file and the one-dimensional index correspondingly comprised in each container data file into a same storage processing node, so as to generate an index table comprising information about i different storage processing nodes.

16. The data indexing apparatus according to claim 15, wherein the index table comprises a key value table and an address allocation table, wherein the address allocation table records an address record corresponding to a key value of each one-dimensional index, the key value table comprises the key value of each one-dimensional index and a storage address corresponding to the key value, and the storage address corresponding to the key value is used for pointing to an address record corresponding to the key value; and
the address record indicates an offset position at which data is recorded in a container data file, and comprises a record number and a record length.

17. The data indexing apparatus according to claim 16, wherein a storage manner of the key value table comprises an ordered linear storage manner or a binary-tree storage manner.

18. The data indexing apparatus according to claim 17, wherein a block storage manner is used as a storage manner of the address allocation table.
